(19) Europäisches Patentamt / European Patent Office / Office européen des brevets

(11) **EP 4 174 770 B1**

(12) **EUROPEAN PATENT SPECIFICATION**

(45) Date of publication and mention of the grant of the patent:
**29.11.2023   Bulletin 2023/48**

(21) Application number: **21205420.9**

(22) Date of filing: **28.10.2021**

(51) International Patent Classification (IPC):
**G06T 7/246** (2017.01)

(52) Cooperative Patent Classification (CPC):
**G06T 7/246;** G06T 2207/20081; G06T 2207/20084;
G06T 2207/30252

(54) **MONOCULAR-VISION-BASED DETECTION OF MOVING OBJECTS**

AUF MONOKULARER SICHT BASIERENDE DETEKTION VON SICH BEWEGENDEN OBJEKTEN

DÉTECTION D'OBJETS EN MOUVEMENT PAR VISION MONOCULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2023   Bulletin 2023/18**

(73) Proprietors:
- **TOYOTA JIDOSHA KABUSHIKI KAISHA**
  **Toyota-shi, Aichi-ken, 471-8571 (JP)**
- **Czech Technical University in Prague**
  **16627 Praha 6 (CZ)**

(72) Inventors:
- **CHUMERIN, Nikolay**
  **1140 Brussels (BE)**
- **NEORAL, Michal**
  **16627 Prague 6 (CZ)**
- **SOCHMAN, Jan**
  **16627 Prague 6 (CZ)**
- **MATAS, Jiri**
  **16627 Prague 6 (CZ)**

(74) Representative: **Cabinet Beau de Loménie**
**158, rue de l'Université**
**75340 Paris Cedex 07 (FR)**

(56) References cited:
- DAVE ACHAL ET AL: "Towards Segmenting Anything That Moves", 2019 IEEE/CVF INTERNATIONAL CONFERENCE ON COMPUTER VISION WORKSHOP (ICCVW), IEEE, 27 October 2019 (2019-10-27), pages 1493-1502, XP033732433, DOI: 10.1109/ICCVW.2019.00187 [retrieved on 2020-03-02]
- WANG XIANSHUN ET AL: "Camera Parameters Aware Motion Segmentation Network with Compensated Optical Flow", 2021 IEEE/RSJ INTERNATIONAL CONFERENCE ON INTELLIGENT ROBOTS AND SYSTEMS (IROS), IEEE, 27 September 2021 (2021-09-27), pages 3368-3374, XP034051820, DOI: 10.1109/IROS51168.2021.9636806 [retrieved on 2021-12-03]
- WANG XIANSHUN ET AL: "Richer Aggregated Features for Optical Flow Estimation with Edge-aware Refinement", 2020 IEEE/RSJ INTERNATIONAL CONFERENCE ON INTELLIGENT ROBOTS AND SYSTEMS (IROS), 24 October 2020 (2020-10-24), pages 5761-5768, XP055912424, DOI: 10.1109/IROS45743.2020.9341544 ISBN: 978-1-7281-6212-6

**Description**

The present invention relates to the field of image processing and, in particular, to the detection of moving objects in image data of a video stream. More particularly, the invention relates to systems and computer-implemented methods that detect, in image data of a monocular video stream, objects moving independently of the observer (i.e. the camera).

There are numerous contexts in which it is desirable to be able to detect, in a dynamic, imaged scene, objects which move, or which have parts that are moving, independently of the observer. For example, in the context of control of an autonomous vehicle, it is desirable to be able to detect objects which have their own dynamics, for instance moving vehicles, pedestrians, animals, etc., as these may require more attention than static objects such as buildings, trees, lampposts, etc., notably in order to assure collision-avoidance. Other contexts in which this task arises include, but are not limited to: video editing, action recognition, and human-robot interaction. In order to be able to segment images in the video stream, i.e. to identify respective regions in the image data that correspond to each dynamic object, it is necessary to detect the moving objects that are present.

Detection of independently-moving objects in a dynamic scene is difficult in the case where the video data is generated by a single camera (monocular vision). The problem becomes particularly complicated in the event that the camera may itself move, for example in the case where it is carried by an autonomous vehicle, robot, etc. In such a case it is necessary to disambiguate the ego motion of the camera from actual motion of objects that are moving independently of the camera, either as a whole or having a part that is moving (e.g. a pedestrian who is moving their leg).

Conventionally, moving-object detection systems and methods treat objects as rigid bodies and seek to identify groups of pixels which undergo the same rigid motion and are connected spatially to one another. However, such an approach gives rise to problems. Firstly, real-world objects often are not rigid and may, indeed, have parts that move in different manners from one another. In such a case conventional video-segmentation methods and systems tend to over-segment the scene, identifying the individual parts of the object as separate objects. Secondly, in a real-world scene there may be two objects positioned close to one another and which are moving along similar trajectories. In such a case conventional video-segmentation methods and systems tend to under-segment the scene, treating the nearby objects as if they were a single object.

The present invention has been made in the light of the above problems.

Embodiments of the present invention provide moving-object detection methods and systems which process monocular video data, which do not require the camera generating this video data to be stationary and which identify whole objects even when only a part is moving.

Embodiments of the present invention segment the image data in the video stream, that is, they output data (segmentation masks) identifying regions of a scene that correspond to moving objects, where the expression "moving objects" designates an object which is moving as a whole or an object having a part that is moving, with this motion being independent of the ego motion of the source of the video data.

The present invention provides a detection system to detect moving objects in image data of a monocular video stream, the detection system comprising:

an object-feature extractor comprising a first trained convolutional neural network structure, the object-feature extractor being configured to receive image data of said monocular video stream and to generate an output comprising object features;

a motion-feature extractor comprising a second trained convolutional neural network structure, the motion-feature extractor being configured to receive image data of said monocular video stream and to generate an output comprising motion features; and

a detection head comprising a third trained convolutional neural network structure, the detection head being configured to receive the outputs of the object-feature extractor and the motion-feature extractor and to output segmentation masks identifying respective regions, in a subject image frame ($I_t$) of the monocular video stream, where moving objects are located;

characterized in that:

the object-feature extractor is configured to generate an output comprising class-agnostic object features; and the motion-feature extractor is configured to generate an output comprising first motion features indicative of motion between the subject image frame ($I_t$) and the previous image frame ($I_{t-1}$) and second motion features indicative of motion between the subject image frame ($I_t$) and the next image frame ($I_{t+1}$).

By combining an object-feature detector that outputs class-agnostic object features with a motion-feature extractor that outputs motion features characterizing forward and backward motion relative to a subject image frame, the detection system according to the invention achieves excellent performance at detecting moving objects even in the case of articulated objects and a monocular video stream.

The motion-feature extractor comprises a motion-cost-volume calculator configured to generate first motion cost volume parameters ($V_{t-1}$) in respect of backward motion from the subject frame ($I_t$) to the previous frame ($I_{t-1}$), and second motion cost volume parameters ($V_{t+1}$) in respect of forward motion from the subject frame ($I_t$) to the next frame ($I_{t+1}$); and the second trained convolutional neural network structure is configured to generate motion-feature tensors ($\mathcal{M}_{t-1}, \mathcal{M}_{t+1}$) from inputs consisting of the first and second motion cost volume parameters ($V_{t-1}$, $V_{t+1}$) generated by the motion-cost-volume calculator.

The motion-cost-volume calculator is configured to determine, from the image data of the video stream, estimates of monocular depth, optical flow, optical expansion and ego-motion, and to generate said first and second motion cost volume parameters ($V_{t-1}$, $V_{t+1}$) from the estimates of monocular depth, optical flow, optical expansion and ego-motion.

The motion-cost-volume calculator may be configured to output, as each of said first and second motion cost volume parameters ($V_{t-1}$, $V_{t+1}$), a motion cost volume consisting of: per-pixel Samson error of the epipolar geometry, per-pixel rotational homography re-projection error, 3D plane + parallax (P+P) cost, depth contrast cost, first frame 3D scene points, rectified motion field, uncertainty of optical flow and optical expansion, 3D distance and 3D angular P+P cost. The invention is not limited to the use of Samson error of the epipolar geometry and, indeed, other error metrics for epipolar geometry may be used (e.g. reprojection error).

The motion-cost-volume calculator may be configured to determine optical flow using the RAFT algorithm, and to output, as the uncertainty of optical flow, a forward-backward consistency cost which is computed as

$$F_{t \to t+1} + warp(F_{t+1 \to t}, F_{t \to t+1})$$

where the warp operation transforms the flow $F_{t+1 \to t}$ to the frame t.

In certain embodiments of the invention the second trained convolutional neural network structure in the motion-feature extractor comprises a residual neural network.

Certain embodiments of the invention comprise a convolution layer arranged to reduce the dimensionality of the output from the motion-feature extractor. By this means it becomes possible to train the convolutional neural network structure of the motion-feature extractor using a training device having relatively limited memory.

The detection head used in the detection system may be a hybrid task cascade head.

In certain embodiments of the invention, the object-feature extractor comprises a residual neural network implementing a recursive feature pyramid backbone with switchable atrous convolutions.

The present invention further provides a method of training the above-mentioned detection system, the training method comprising:

applying a first training data set to a combination of the object-feature extractor and a first temporary detection head, to determine weights in the first convolutional neural structure of the object-feature extractor that enable output of class-agnostic object features from the object-feature extractor, and fixing the determined weights;

applying a second training data set to a combination of the second convolutional neural network structure, of the motion-feature extractor, and a second temporary detection head, to determine second weights in the second convolutional neural network structure of the motion-feature extractor that enable output of forward-motion and backward-motion features from the motion-feature extractor, and fixing the determined weights;

with said weights in the object-feature extractor and motion-feature extractor being fixed, applying a third training data set to the detection head to train the detection head to output segmentation masks identifying respective regions, in a subject image frame ($I_t$) of the video stream, where moving objects are located.

The above-recited training method produces a trained detection system as mentioned above and enables the training process to be implemented using lower-performance graphic processing units (GPUs) and a smaller-sized memory than would otherwise be required for implementing end-to-end training of the overall detection system. It should be mentioned that the same dataset may be used as the first training data set and as the second training dataset, or the first and second training datasets may be different from one another.

Further features and advantages of the present invention will become apparent from the following description of certain embodiments thereof, given by way of illustration only, not limitation, with reference to the accompanying drawings in which:

Figure 1 illustrates, schematically, the main components of a moving-object detection system according to a generic embodiment of the present invention;

Figure 2 illustrates, schematically, an object-feature extractor used in the system according to Fig.1, in which

Fig.2A schematically illustrates the object-feature extractor functioning in a production phase, and
Fig.2B schematically illustrates the object-feature extractor operating in a training phase;

Fig.3 schematically illustrates a particular embodiment of the object-feature extractor of Figs.1 and 2;
Figure 4 illustrates, schematically, a motion-feature extractor used in the system according to Fig.1, in which

Fig.4A schematically illustrates the motion-feature extractor functioning in a production phase, and
Fig.4B schematically illustrates the motion-feature extractor operating in a training phase;

Fig.5 illustrates, schematically, a particular embodiment of motion cost volume calculator that may be employed in the motion-feature extractor of Figs.1, 2 and 4;
Fig.6 schematically illustrates a particular embodiment of a convolutional neural network structure that may be used in the motion-feature extractor of Figs.1, 2 and 4;
Fig.7 illustrates, schematically, a particular embodiment of detection head that may be used in the system according to Fig.1, in which

Fig.7A schematically illustrates the detection head functioning in a production phase, and
Fig.7B schematically illustrates the detection head operating in a training phase;

Fig.8 shows images illustrating image-segmentation performance of an embodiment of the present invention, as compared to performance of other moving-objection detection and segmentation systems, in relation to a first test image frame from the KITTI dataset, in which:

Fig.8A illustrates ground truth, that is, the true position of moving objects in the first test image frame,
Fig.8B illustrates a first segmentation of the first test image frame, produced using the moving-object detection and segmentation system according to the tested (Raptor) embodiment of the invention,
Fig.8C illustrates a second segmentation of the first test image frame, produced according to a first comparative example of moving-object detection and segmentation system employing the RigidMask algorithm; and
Fig.8D illustrates a third segmentation of the first test image frame, produced according to a second comparative example of moving-object detection and segmentation system employing the Towards algorithm;

Fig.9 shows images illustrating image-segmentation performance of an embodiment of the present invention, as compared to performance of other moving-objection detection and segmentation systems, in relation to a second test image frame from the KITTI dataset, in which:

Fig.9A illustrates ground truth, that is, the true position of moving objects in the second test image frame,
Fig.9B illustrates a first segmentation of the second test image frame, produced using the moving-object detection and segmentation system according to the tested embodiment of the invention,
Fig.9C illustrates a second segmentation of the second test image frame, produced by the first comparative example moving-object detection and segmentation system employing the RigidMask algorithm; and
Fig.9D illustrates a third segmentation of the second test image frame, produced by the second comparative example moving-object detection and segmentation system employing the Towards algorithm;

Fig.10 shows images illustrating image-segmentation performance of an embodiment of the present invention, as compared to performance of other moving-objection detection and segmentation systems, in relation to a third test image frame from the DAVIS-Moving dataset, in which:

Fig.10A illustrates ground truth,
Fig.10B illustrates a first segmentation of the third test image frame, produced using the moving-object detection and segmentation system according to the tested embodiment of the invention,
Fig.10C illustrates a second segmentation of the third test image frame, produced by the first comparative example moving-object detection and segmentation system employing the RigidMask algorithm; and
Fig.10D illustrates a third segmentation of the third test image frame, produced by the second comparative example moving-object detection and segmentation system employing the Towards algorithm;

Fig.11 shows images illustrating image-segmentation performance of an embodiment of the present invention, as compared to performance of other moving-objection detection and segmentation systems, in relation to a fourth test image frame from the DAVIS-Moving dataset, in which:

> Fig.11A illustrates ground truth,
> Fig.11B illustrates a first segmentation of the fourth test image frame, produced using the moving-object detection and segmentation system according to the tested embodiment of the invention,
> Fig.11C illustrates a second segmentation of the fourth test image frame, produced by the first comparative example moving-object detection and segmentation system employing the RigidMask algorithm; and
> Fig.11D illustrates a third segmentation of the fourth test image frame, produced by the second comparative example moving-object detection and segmentation system employing the Towards algorithm;

Fig.12 shows images illustrating image-segmentation performance of an embodiment of the present invention, as compared to performance of other moving-objection detection and segmentation systems, in relation to a fifth test image frame from the YTVOS-Moving dataset, in which:

> Fig.12A illustrates ground truth,
> Fig.12B illustrates a first segmentation of the fifth test image frame, produced using the moving-object detection and segmentation system according to the tested embodiment of the invention,
> Fig.12C illustrates a second segmentation of the fifth test image frame, produced by the first comparative example moving-object detection and segmentation system employing the RigidMask algorithm; and
> Fig.12D illustrates a third segmentation of the fifth test image frame, produced by the second comparative example moving-object detection and segmentation system employing the Towards algorithm;

Fig.13 shows images illustrating image-segmentation performance of an embodiment of the present invention, as compared to performance of other moving-objection detection and segmentation systems, in relation to a sixth test image frame from the YTVOS-Moving dataset, in which:

> Fig.13A illustrates ground truth,
> Fig.13B illustrates a first segmentation of the sixth test image frame, produced using the moving-object detection and segmentation system according to the tested embodiment of the invention,
> Fig.13C illustrates a second segmentation of the sixth test image frame, produced by the first comparative example moving-object detection and segmentation system employing the RigidMask algorithm; and
> Fig.13D illustrates a third segmentation of the sixth test image frame, produced by the second comparative example moving-object detection and segmentation system employing the Towards algorithm; and

Fig.14 shows images illustrating image-segmentation performance of the tested embodiment of the present invention, as compared to performance of variants of the tested embodiment in which selected components of the system are omitted, in relation to segmentation of the third test image frame from the DAVIS-Moving dataset, in which:

> Fig.14A illustrates a segmentation of the third test image frame, produced using a first variant comprising only the object-feature extractor plus detection head,
> Fig.14B illustrates a segmentation of the third test image frame, produced using a second variant comprising only the motion-feature extractor plus detection head and wherein the motion-feature extractor receives as input motion cost volume features only in respect of the forward direction,
> Fig.14C illustrates a segmentation of the third test image frame, produced using a third variant comprising the object-feature extractor, the motion-feature extractor and the detection head, wherein the motion-feature extractor receives as input motion cost volume features only in respect of the forward direction,
> Fig.14D illustrates a segmentation of the third test image frame, produced using the moving-object detection and segmentation system according to the tested (Raptor) embodiment of the invention, and
> Fig.14E illustrates ground truth in respect of moving objects in the third test image frame.

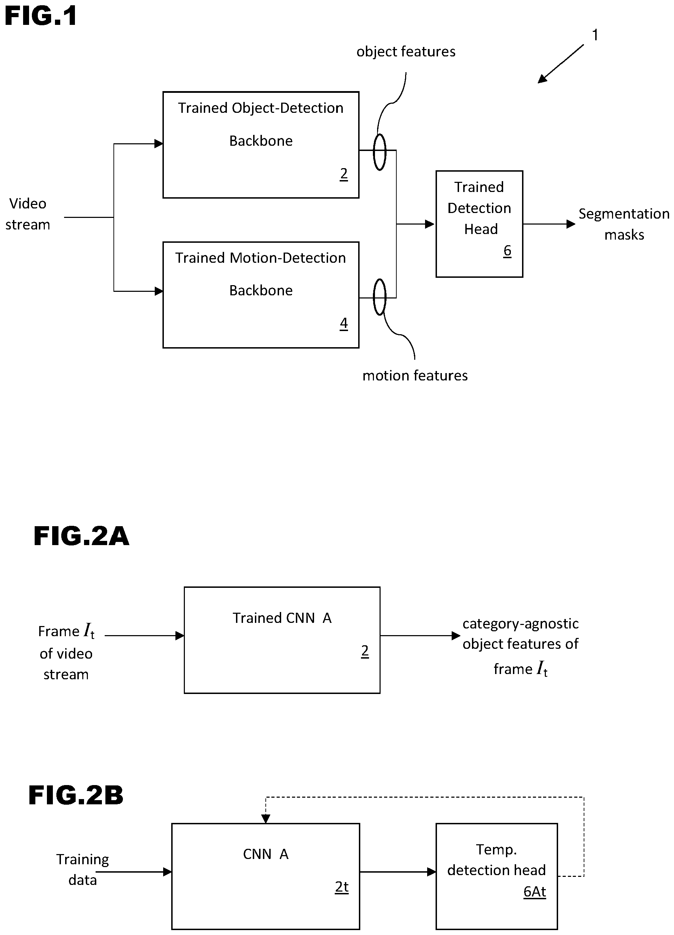

Dynamic-object detection systems according to various embodiments of the invention, and methods of detecting dynamic objects in a monocular video stream according to various embodiments of the invention will now be described with reference to Figs. 1 to 14E. The methods and systems according to certain embodiments of the invention will be described in the context of techniques which not only detect moving objects but also segment the images in the video stream to identify respective regions where the moving objects are located.

The invention proposes a CNN-based architecture whose preferred embodiment is called Raptor, which is based on a novel combination of semantic and geometrical processing of the input frames. In preferred embodiments of the invention, a class-agnostic object-detection part leads to discovery of semantically meaningful objects, while a geometrical motion cost volume processing part solves the apparent motion ambiguities. The network discovers both rigid and non-rigid moving objects and their instance (object) segmentation masks.

Fig.1 is a schematic representation of main modules comprised in the moving-object detection system 1 according to a first, generic embodiment of the invention. A monocular video stream is input to, and processed in parallel by, an object-detection backbone 2 and a motion-detection backbone 4. Incidentally, the object-detection backbone 2 may also be referred to as an object-feature extractor, and the motion-detection backbone 4 may also be referred to as a motion-feature extractor. The monocular video steam represents a scene imaged by an imagecapture device such as a video camera, and the scene may include dynamic objects which are moving, or have parts that are moving, independently of the camera. The monocular video steam may be a live feed output by a video camera (e.g. a video camera mounted on a vehicle), but the invention is not particularly limited having regard to the source of the video data input to the moving-object detection system 1 and it is to be understood that the system can operate not only on live data but also on recorded data.

The object-detection backbone 2 is a trained feature extractor and it is configured to process the input video stream to generate features indicative of (characteristic of) objects. The object-detection backbone 2 supplies, to a detection head 6, an output comprising the generated object features. The motion-detection backbone 4 is also a trained feature extractor but, in this case, it is configured to process the input video stream to generate features indicative of (characteristic of) motion. The motion-detection backbone 4 supplies, to the detection head 6, an output comprising the generated motion features. Each of the object-detection backbone 2 and the motion-detection backbone 4 comprises trained convolutional neural network (CNN) structures, as shall be described below.

The detection head 6 is a trained detector which is configured to process the outputs received from the object-detection backbone 2 and the motion-detection backbone 4 and to generate image-segmentation masks indicative of respective regions in the scene where moving objects are located. The detection head 6 is arranged to output the segmentation masks to a downstream module whose functionality varies according to the application. For example, the detection head 6 may output the segmentation masks to a module which computes trajectories of detected moving objects. The detection head 6 comprises a trained CNN structure, as shall be described below.

The components illustrated in Fig.1 operate in respective training and production phases. Further details regarding the production and training phases shall be given below.

Fig.2A illustrates an embodiment of the (trained) object-detection backbone 2 operating during the production phase. As illustrated in Fig.2, the object-detection backbone 2 is a trained CNN arranged to receive as input an image frame $I_t$ of the video stream and to generate an output comprising category-agnostic object features considered to be present in image frame $I_t$. Here, "category-agnostic" features means that the features are characteristic of objects in general, rather than being characteristic of a specific category of object (house, tree, person, etc).

Indeed, during the training phase the convolutional neural network structure in question, which we shall designate CNN_A (or 2t to indicate that the object-feature extractor 2 is undergoing training), receives as input training data that represents various images that include objects and is trained to recognize characteristics of objects in general, rather than to identify specific categories of object.

Although the overall moving-object detection system 1 of Fig.1 can undergo end-to-end training as a whole, in preferred embodiments of the invention the training is split so that the components of the overall system are trained separately of one another and, in such a case, it becomes possible to use lower-performance graphic processing units (GPUs) and a smaller-sized memory. Thus, as illustrated in Fig.2B, in a preferred embodiment of the invention, during the training phase the output of the object-feature extractor 2t is connected to a first temporary detection head 6At (for example, a temporary hybrid task cascade head), and the combination of the object-feature detector 2t and the first temporary detection head 6At are trained together using training data comprising images from the COCO dataset (see "Microsoft Coco: Common objects in context" by Tsung-Yi Lin, et al, in European Conference on Computer Vision, 2014, pages 740-755, Springer, and the website https:Hcocodata set. org). The COCO dataset includes a large body of labelled image data including images of various moving objects. The COCO dataset contains still images rather than video but this is acceptable in this case because the object-feature extractor 2t is being trained separately from the motion-feature extractor 4.

During the above-mentioned training process illustrated by Fig.2B, it is preferred for the combination of the object-feature detector 2t and the first temporary detection head 6At to be trained on a class-agnostic object-detection problem, i.e. during the training process all of the individual categories of object in the dataset are merged into a single category of generic "object", for example following the class-agnostic training approach described in "Towards segmenting anything that moves." by Achal Dave, et al, in Proceedings of the IEEE International Conference on Computer Vision Workshops", 2019, the whole contents of which are incorporated herein by reference. By training the object-feature extractor 2 to output class-agnostic object features, it has been found that a moving-object detection system according to this embodiment of the invention is better at generalizing to objects of classes that were not represented in the training dataset. For example, the moving-object detection system can detect a moving camel even if the training dataset did not include camels but only included horses.

After the object-feature extractor 2 has been trained to extract object features that are class-agnostic, the temporary detection head 6At is removed and the backbone weights in the neural network structure of object-feature extractor 2 are fixed.

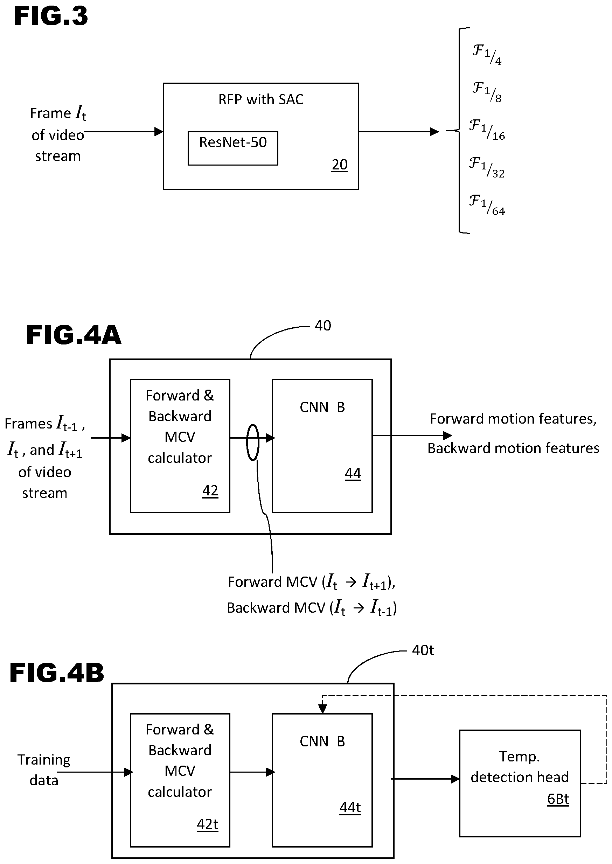

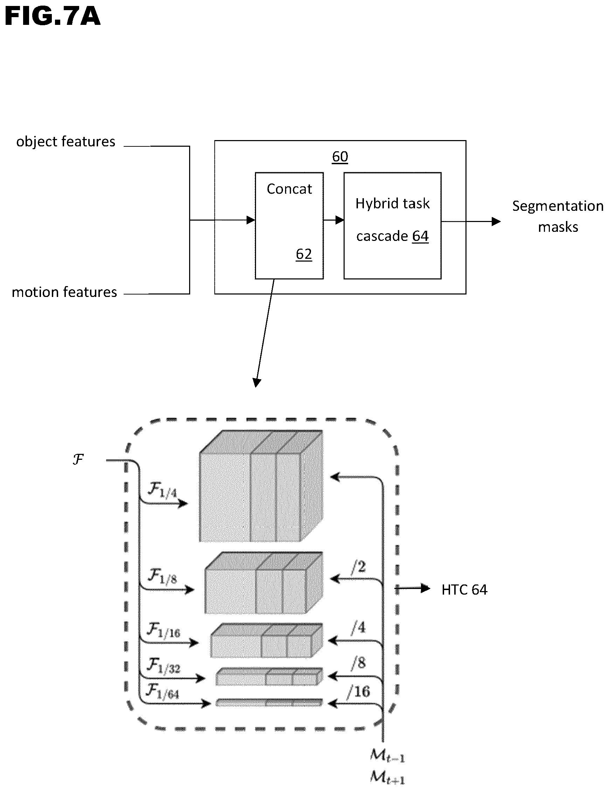

In a preferred example implementation, illustrated in Fig.3, the object-feature extractor 2 is implemented using a residual neural network structure, notably a ResNet-50 architecture. Moreover, the ResNet-50 architecture is configured to implement a Recursive Feature Pyramid (RFP) backbone with Switchable Atrous Convolutions (SACs). An RFP backbone using SACs is employed in the DetectoRS configuration that is described in "DetectoRS: Detecting objects with recursive feature pyramid and switchable atrous convolution" by Siuan Qiao, et al, arXiv preprint, arXiv:2006.02334, 2020, the whole contents of which are incorporated herein by reference. In the implementation illustrated in Fig.3 (and Fig.7A described below), the trained object-feature extractor 6 is configured to output five feature tensors $\mathcal{F}_{1/4}, \mathcal{F}_{1/8}, \mathcal{F}_{1/16}, \mathcal{F}_{1/32}, \mathcal{F}_{1/64}$ with decreasing spatial resolution and each of these tensors has 256 channels. The number and dimensions of the output from the object-feature extractor 2 are dependent on the particular network architecture that is being employed (ResNet-50 in this example). It will be understood that other backbone networks different from ResNet-50 may be used in the object-feature extractor 2 in embodiments of the present invention and these may yield outputs having different dimensions and different numbers of channels.

Fig.4A illustrates an embodiment of the (trained) motion-detection backbone 4 operating during the production phase. As illustrated in Fig.4A, the motion-detection backbone 4 is arranged to receive as input three image frames of the video stream - the subject image frame $I_t$ as well as the preceding frame $I_{t-1}$ and the succeeding frame $I_{t+1}$ - and to generate an output comprising features characterising forward motion (i.e. motion occurring from image frame $I_t$ to image frame $I_{t+1}$) and tensors comprising features characterising backward motion (i.e. motion in the direction from image frame $I_t$ to image frame $I_{t-1}$).

As illustrated in Fig.4A, the motion-detection backbone 4 comprises a convolutional neural network structure 44 (designated in Fig.4A as CNN B) configured to receive, as inputs, forward motion cost volume (MCV) features and backward motion cost volume (MCV) features. One or more modules 42 separate from the CNN 44 calculate the elements of the forward and backward MCVs (see below).

Unlike the majority of methods, this architecture uses three frames for the moving-object detection and segmentation problem and, in particular, it is believed to be the first to employ to three frames in a motion-detection backbone.

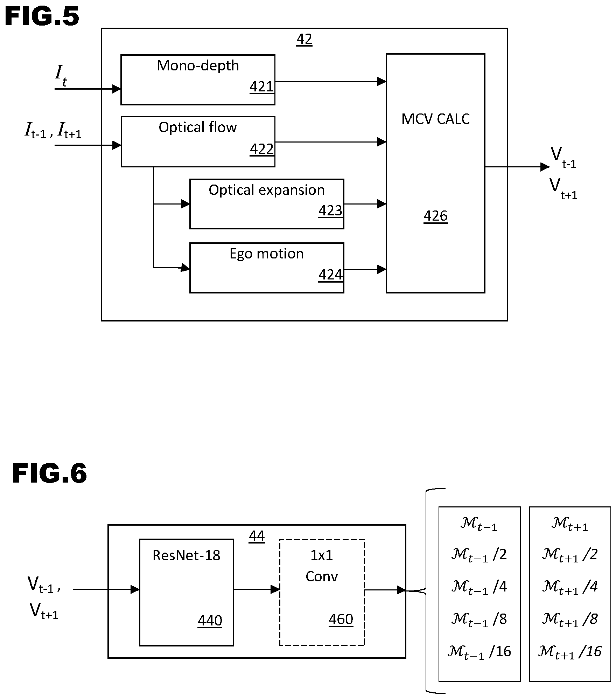

According to the invention, illustrated by Fig.5, the forward and backward MCV calculator 42 comprises a module 421 to determine monodepth $D_t$, a module 422 to determine optical flow (including optical flow $F_{t \to t+1}$ from the subject frame t to the next frame t+1, and optical flow $F_{t \to t-1}$, from the subject flow t to the preceding frame t-1), a module 423 to determine optical expansion (including optical expansion $E_{t+1}$ in respect of the frame t+1, and optical expansion $E_{t-1}$, in respect of the frame t-1), and a module 424 to determine ego motion of the source of the video data (e.g. a camera). The forward and backward MCV calculator 42 is configured to determine the following parameters: monocular depth $D_t$, optical flow $F_{t \to t+1}$, optical expansion $E_{t+1}$, and ego-motion estimation, $[R_{t+1}, t_{t+1}]$, as inputs for the forward motion cost volume construction, and to compute the "backward" MCV using $F_{t \to t-1}$, $E_{t-1}$, and ego-motion estimation, $[R_{t-1}, t_{t-1}]$. In this example a fourteen channel MCV ($V_{t-1}, V_{t+1}$) is constructed for each direction, consisting of: per-pixel Samson error of the epipolar geometry, per-pixel rotational homography re-projection error, 3D P+P cost, depth contrast cost, first frame 3D scene points, rectified motion field, uncertainty of optical flow and optical expansion, 3D distance and 3D angular P+P cost. The skilled person readily understands from their common general knowledge how to determine these parameters from the monocular depth, optical flow, optical expansion, and ego-motion estimation (for example, 3D P+P cost may be calculated according to equation 10 in "Learning to segment rigid motions from two frames" by Gengshan Yang et al, arXiv preprint arXiv 2101.04694, 2021, the whole contents of which are incorporated herein by reference). These costs are designed to indicate inconsistency with the estimated ego-motion while dealing with various ambiguities of co-planar or co-linear motion or the ego-motion degeneracy. The forward and backward MCV calculator 42 outputs the forward and backward MCVs, $V_{t-1}, V_{t+1}$, to the CNN 44 of the motion-feature extractor branch.

It will be understood that embodiments of the present invention may make use of MCVs that contain a number of channels different from 14. Use of a smaller number of channels, i.e. omitting some geometrical costs, tends to reduce accuracy. If desired, additional costs may be added to the MCV computation, for example, accumulated 3D scene representation from previous frames.

The forward and backward MCV calculator 42 may use several different algorithms to generate the above-mentioned parameters and a variety of suitable algorithms to generate the listed parameters will readily occur to the skilled person from their general knowledge. Thus, for example, optical flow may be estimated using the VCN algorithm described in "Volumetric correspondence networks for optical flow" by Gengshan Yang et al, in "Advances in Neural Information Processing Systems", 2019, pages 793-803. However, in preferred embodiments of the invention the RAFT algorithm (described in "Recurrent all-pairs field transforms for optical flow" by Zachary Teed et al, arXiv preprint arXiv 2003.12039,2020, the whole contents of which are incorporated herein by reference) is used to estimate optical flow despite the fact that, unlike the original VCN, RAFT does not produce a value for the out-of-range confidence. As a replacement for the out-of-range confidence, in the present example embodiment, a forward-backward consistency cost is used which is computed for MCV as $F_{t \to t+1}$ + warp($F_{t+1 \to t}$, $F_{t \to t+1}$), where the warp operation transforms the flow $F_{t+1 \to t}$ to the frame t. Unlike usual approaches, in the present case the forward-backward consistency cost is not thresholded. According to the present embodiment, so as to be able to generate optical flow estimates for use in calculating the MCVs RAFT was trained on a wide range of datasets and, to achieve increased generalisation, the training was performed Robust Vision Challenge style (see "Continual occlusions and optical flow estimation" by Michal Noral et al, arXiv preprint, arXiv:1811.01602, 2018, and "Praflow_rvc: Pyramid recurrent all-pairs field transforms for optical flow estimation in robust vision challenge 2020" by Zhexiong Wan et al, arXiv preprint arXiv: 2009.06360, 2020, the whole contents of both of which are incorporated herein by reference). The optical expansion calculation part of the forward and backward MCV calculator 42 was retrained using the optical flow estimate produced using RAFT.

In the present embodiment, construction of the MCV involves decomposition of essential matrices and this, in turn, requires intrinsic camera parameters and estimates of camera motion [R; t]. In one implementation, essential matrix estimation is performed according to the NG-RANSAC algorithm described in "Neural-guided ransac: Learning where to sample model hypotheses, by Eric Brachmann, et al, in Proceedings of the IEEE International Conference on Computer Vision, pages 4322-4331, 2019, the whole contents of which are incorporated herein by reference. Such an approach facilitates end-to-end training of the overall moving-object detection system 1.

As mentioned above, in preferred embodiments of the invention the components of the overall moving-object detection system 1 are trained separately. Thus, as illustrated in Fig.4B, during the training phase the convolutional neural network structure in question, CNN_B (labelled as 44t in Fig.4B to indicate that the motion-feature extractor 4 is undergoing training), receives as input MCVs generated by the forward and backward MCV generator 42t in respect of training data that represents various images that include motion, and is trained to recognize characteristics of forward and backward motion from the MCVs.

Fig.6 illustrates an example implementation of the motion-branch CNN architecture 44. In this example, the motion branch backbone architecture 44 is similar to the object-feature extractor backbone, but instead of ResNet-50, it builds on the ResNet-18 DetectoRS architecture. The input is the 14-channel motion cost volume discussed above in relation to Fig.5. No image features are input to the motion backbone 44.

As illustrated in Fig.4B, the CNN backbone of the motion-feature extractor 4/40 may be trained (separately from the object-feature extractor 2) in combination with another temporary HTC head 6Bt on the moving object detection and segmentation problem. In an example implementation of this training, the CNN backbone of the motion-feature extractor 40 was trained, with the temporary HTC head 6Bt, using as the training dataset the FlyingThing3D dataset described in "A large dataset to train convolutional networks for disparity. Optical flow, and scene estimation" by Nikolaus Meyer, et al, in CVPR 2016. All three parts of the FlyingThings3D dataset were used, that is: Moonka, Driving, and FlyingThings3D. At the end of the training of the motion-feature extractor 4, the temporary HTC head 6Bt is jettisoned and the weights in the CNN structure of the motion-feature extractor 4 are fixed.

In the present example the motion backbone 44t was trained to work for both forward and backward MCVs with the same weights. The MCVs for forwards and backwards directions pass-through the motion backbone 44 one by one.

The motion-feature extraction branch outputs feature sets for both directions, $\mathcal{M}_{t-1}$ , $\mathcal{M}_{t+1}$ . In the example illustrated in Fig.6, five feature tensors are produced for each direction, with decreasing spatial resolution, $\mathcal{M}_{t-1}, \mathcal{M}_{t-1}/2, \mathcal{M}_{t-1}/4, \mathcal{M}_{t-1}/8, \mathcal{M}_{t-1}/16$ and $\mathcal{M}_{t+1}, \mathcal{M}_{t+1}/2, \mathcal{M}_{t+1}/4, \mathcal{M}_{t+1}/8, \mathcal{M}_{t+1}/16$ (to match the number of feature tensors produced by the example object-feature extractor 20 of Fig.3) and each of these tensors has 256 channels. If desired, in order to allow use of a training device having relatively limited memory, the outputs of the motion backbone 44 may be normalised to 128-channel by providing an extra 1x1 convolution layer 460 as illustrated in dashed lines in Fig.6. Such an implementation is used in a preferred embodiment of the invention.

As in the case of the object-feature extractor so also for the motion-feature extractor, the number and dimensions of the output depends on the particular network architecture in the implementation (in this example a ResNet-18 network). In other embodiments of the invention the motion-feature extractor may use different network architectures and generate an output having a different number of dimensions and channels. It is not essential for the output from the motion-feature extractor 4 to have the same number of channels as the output from the object-feature extractor 2, but it is preferable for the number of output tensors to be the same and for the spatial dimensions to match (to enable concatenation - see below).

As the MCVs are designed for rigid body motion only, in respect of articulated objects it reports part-only inconsistency. It is the task of the detection head 6 of the moving-object detection and segmentation system 1 illustrated in Fig.1 to combine these partial inconsistencies in the motion features output from the motion-feature extractor 4 with the object features output by the object-feature extractor 2 and output the complete moving object segmentation masks.

Fig.7A illustrates an example implementation of the detection head 60 in the production phase. In this implementation, the motion-features output by the motion-feature extractor 4 for both directions are concatenated with the object-features from object-feature extractor 2, by a concatenation architecture 62, and are fed to a trained hybrid task cascade head 64. The example illustrated in Fig.7A illustrates concatenation of five, 256-channel object-feature tensors ($\mathcal{F}_{1/4}, \mathcal{F}_{1/8}, \mathcal{F}_{1/16}, \mathcal{F}_{1/32}, \mathcal{F}_{1/64}$) output by an object-feature extractor 20 according to the specific example implementation described above in connection with Fig.3, with the five, 128-channel forward and five, 128-channel backward motion-feature tensors ($\mathcal{M}_{t-1}, \mathcal{M}_{t-1}/2, \mathcal{M}_{t-1}/4, \mathcal{M}_{t-1}/8, \mathcal{M}_{t-1}/16$ and $\mathcal{M}_{t+1}, \mathcal{M}_{t+1}/2, \mathcal{M}_{t+1}/4, \mathcal{M}_{t+1}/8, \mathcal{M}_{t+1}/16$) output by a motion-feature extractor 40 employing a CNN backbone 44 according to the specific example implementation described above in connection with Fig.6.

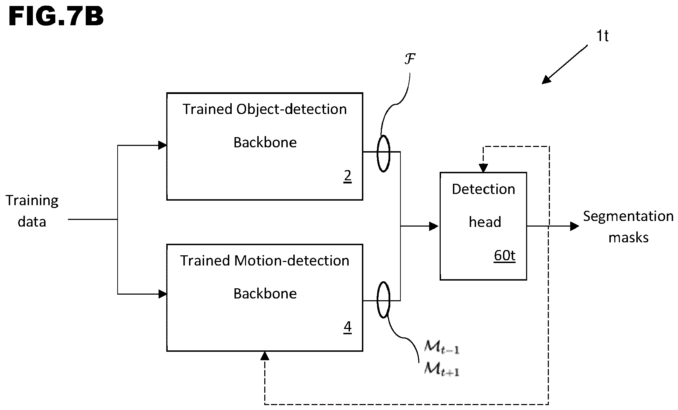

As mentioned above, in preferred embodiments of the invention the components of the overall moving-object detection system 1 are trained separately. Thus, as illustrated in Fig.7B, for the final stage in such a training process the already-trained object-feature extractor 2/20 and already-trained motion-feature extractor 4/40 are employed, with their weights fixed, and only the final HTC head 6/60 is trained for moving object discovery and segmentation. In cases where the motion-feature extractor 40 is used and includes a normalisation 1x1 CNN layer 460, the 1x1 CNN layer 460 is trained, together with the HTC head 6/60, during this final stage of training.

In an example implementation, called Raptor, the moving-object detection system 1 was implemented using an object-feature extractor according to the embodiment 20 illustrated in Fig.3, a motion-feature extractor 40 according to the embodiments illustrated in Figs.4A, 5 and 6, and an HTC head 60 as illustrated in Fig.7A. The object feature extractor 20 was trained using the COCO dataset as described above in connection with Fig.2B and the motion-feature extractor 40 was trained using the FlyingThings3D dataset as described above in connection with Fig.4B. Then, the final stage in the training (illustrated in Fig.7B) also made use of the FlyingThings3D dataset. In order to facilitate comparison between the performance achieved by Raptor and the performance of other moving-object detection and segmentation systems, a training procedure was employed that implemented the method described in the Gengshan Yang et al paper "Learning to segment rigid motions from two frames" mentioned above. Instance motion segmentation masks were determined by the HTC head 6/60 from ground truth depth, optical flow, object masks and camera positions.

It will be understood that moving-object detection systems according to the invention are generally implemented digitally, that is, by implementing the described neural network structures, combinations and training in software. Accordingly, the present invention provides a computer system programmed to implement the moving-object detection system described above, according to any of its embodiments. Likewise, the present invention provides a computer system programmed to implement the moving-object detection method described above, according to any of its embodiments. In a similar way, the present invention provides a non-transitory computer-readable medium containing instructions which, when executed by a computer system, cause the computer system to implement a moving-object detection system or a moving-object detection system as described above, according to any of their embodiments.

A number of experiments were performed to compare the performance of a moving-object detection system according to the Raptor embodiment of the invention with some recent object-notion segmentation algorithms that have been considered to offer good performance, namely: "Towards" (described in the paper by Achal Dave et al mentioned above), and "RigidMask (mono)" (described in the paper by Gengshan Yang et al mentioned above). Two version of "Towards" were used in the experiments. The usual version of "Towards" incorporates offline tracking of the whole sequence of movement, both forward and backward in time, as a final stage in the estimation process. To offer a fairer comparison between "Towards" and the other algorithms/systems, a second version of "Towards", without the offline tracking, was also tested. In the table below, this second version of "Towards" is indicated by the designation "w/o tracking".

The experiments involved determining how well the embodiment of trained moving-object detection system according to the invention (Raptor) segmented image data from a number of datasets, in comparison with the performance of other algorithms/systems. The datasets used in the experiments included: KITTI (described in "Object Scene flow for Autonomous vehicles" by Moritz Menze et al, in CVPR, 2015), DAVIS-Moving (described in the Achal Dave paper mentioned above, and YTVOS-Moving (also described in the Achal Dave paper). These datasets reflect a wide range of conditions for moving object discovery and segmentation applications, from autonomous driving (KITTI) to freehand camera motion (YTVOS, DAVIS). All of the datasets contain both rigid and non-rigid moving objects of a variety of semantic classes.

The original KITTI dataset contains moving object segmentation ground truth, but it is restricted to a subset of moving cars and vans only. Other types of moving objects (buses, trains, pedestrians) are not part of the ground truth data. In order to generate a richer dataset we manually labelled the sequences in KITTI to complete the annotations. The resultant dataset is referred to below as KITTI-complete. For compatibility with previous evaluations, results are presented in respect both of KITTI and KITTI-complete.

The KITTI dataset tests well a forward camera motion through a structured environment, DAVIS-Moving contains a variety of object classes and environments and the camera is usually following the main subject, while YTVOS-Moving is composed of rather difficult sequences with partially visible objects and background which is sometimes barely visible and often difficult for geometrical approaches to deal with.

The KITTI dataset contains intrinsic camera parameters, which are used for camera motion estimation during the evaluation below. DAVIS and YTVOS datasets do not contain the camera calibrations. Thus, these have been approximated by setting the focal length to $1/max(I_{width}, I_{height})$, setting the principal point to the middle point of the image and assuming square pixels.

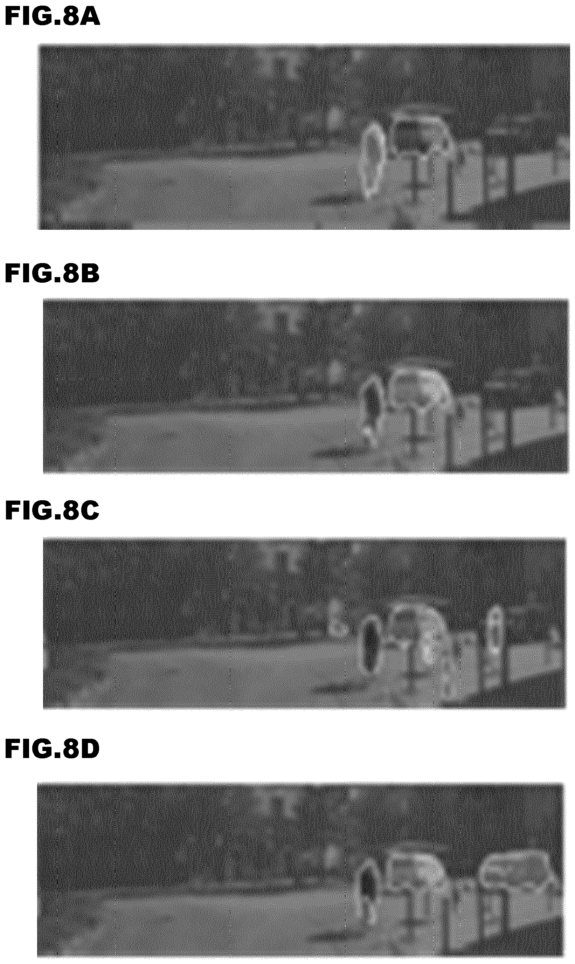

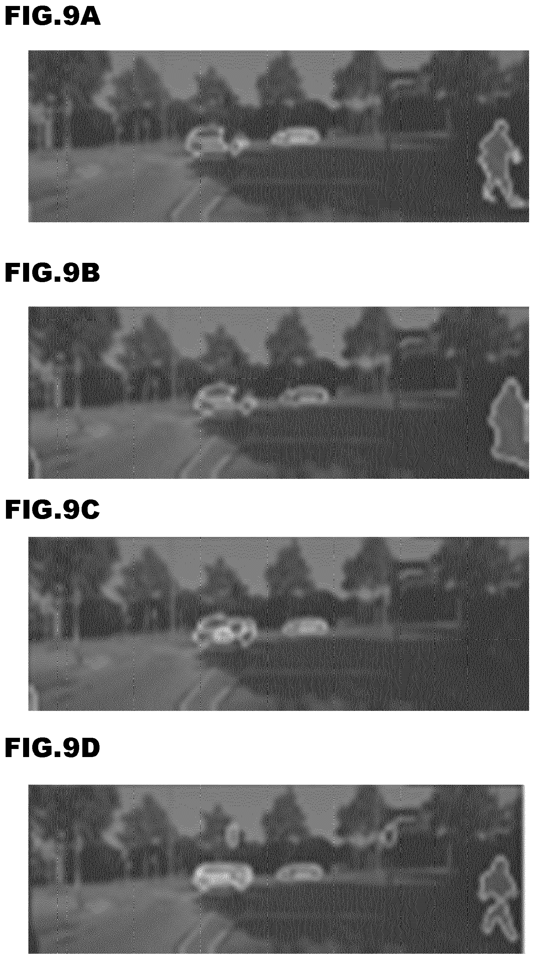

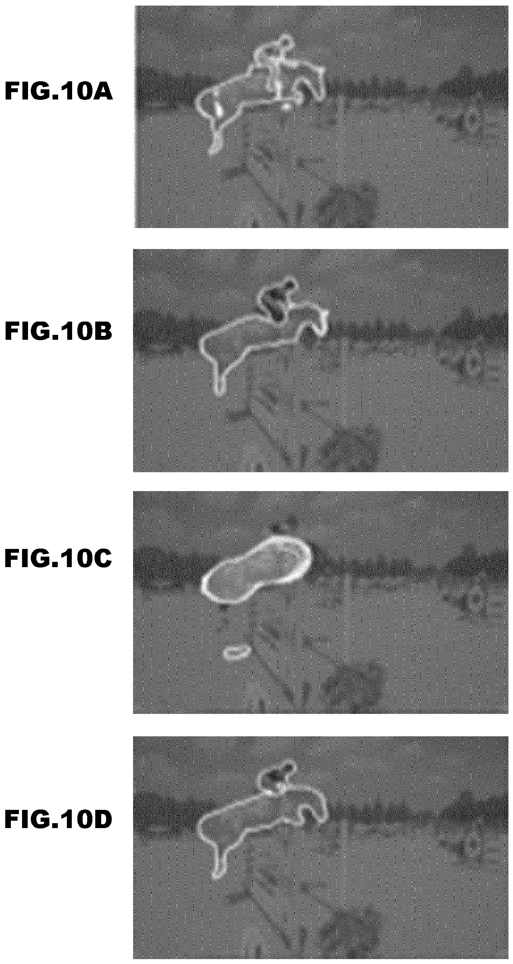

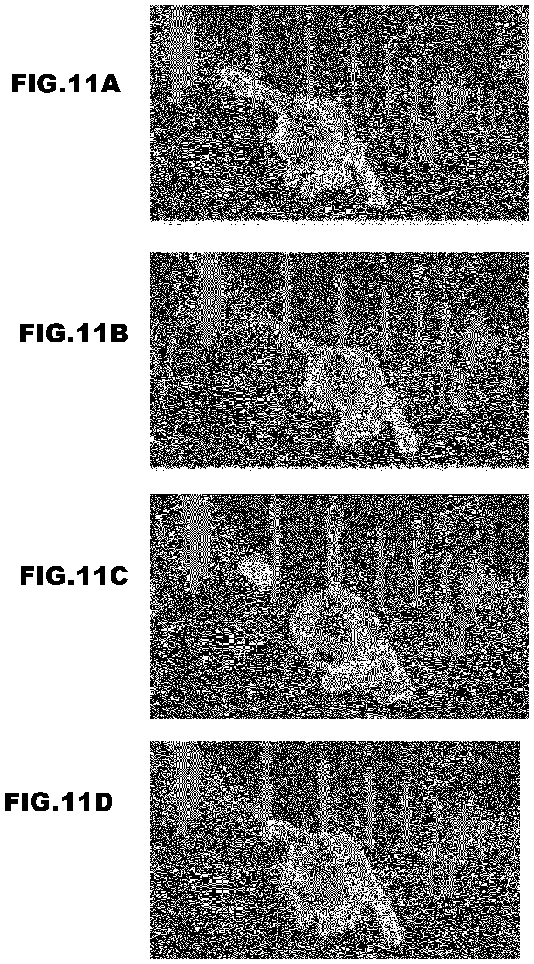

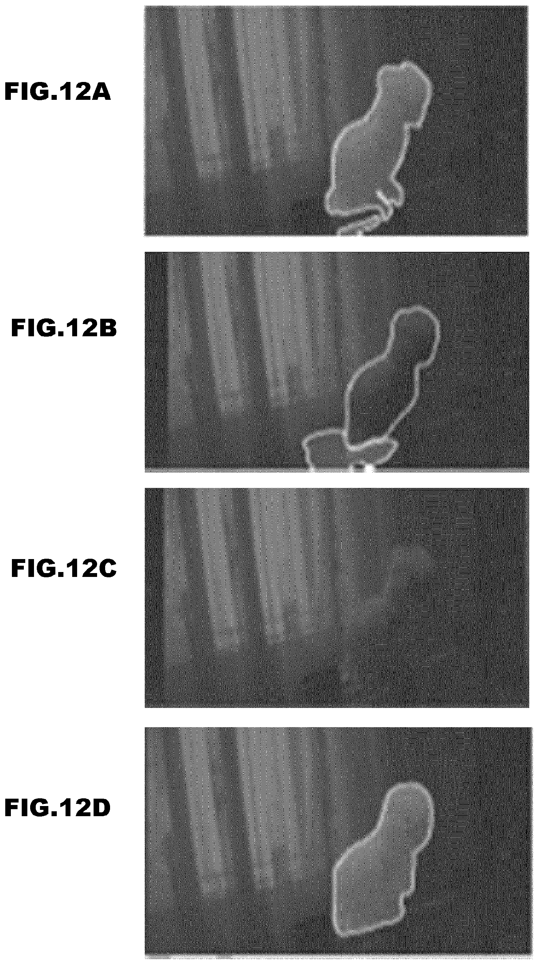

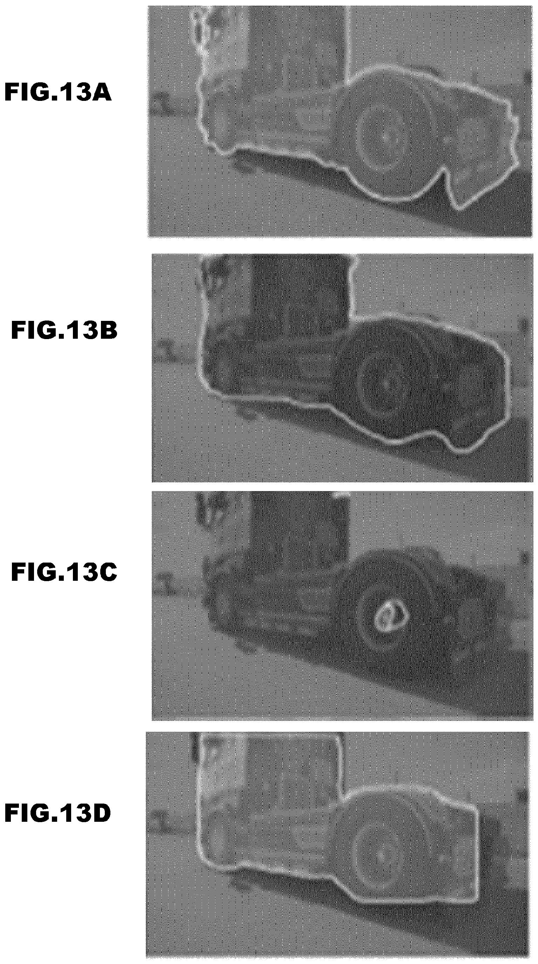

Figs.8A to 8D through Figs.13A-13D show images illustrating image-segmentation performance of Raptor as compared to performance of Towards and RigidMask. Figs.8A-8D relate to segmentation of a first test image frame from the KITTI dataset. Figs.9A-9D relate to segmentation of a second test image frame, also from the KITTI dataset. Figs.10A-10D relate to segmentation of a third test image frame from the DAVIS-Moving dataset. Figs.11A-11D relate to segmentation of a fourth test image frame, also from the DAVIS-Moving dataset. Figs.12A-12D relate to segmentation of a fifth test image frame from the YTVOS-moving dataset. Figs.13A-13D relate to segmentation of a sixth test image frame, also from the YTVOS-moving dataset. Each of Figs.8A, 9A, 10A, 11A, 12A and 13A represent the ground truth segmentation, i.e. they include outlines indicating the true positions of moving objects in the image frame in question. Each of Figs.8B, 9B, 10B, 11B, 12B and 13B represent segmentations produced using the moving-object detection and segmentation system according to the tested Raptor embodiment of the invention. Each of Figs.8C, 9C, 10C, 11C, 12C and 13C represent segmentations produced using a first comparative example of moving-object detection and segmentation system employing the RigidMask algorithm. Each of Figs.8D, 9D, 10D, 11D, 12D and 13D represent segmentations produced using a second comparative example of moving-object detection and segmentation system employing the Towards algorithm.

It can be seen from Figs.8A through 13D that the Raptor embodiment detects moving objects and their locations within the images with high accuracy over a diverse range of datasets even though it has been trained using only the COCO and FlyingThings3D datasets.

A number of variants of the Raptor embodiment were constructed in which selected components of the system were omitted and the performance of the variants in segmenting images from the various datasets was evaluated so as to demonstrate the benefits of combining the object-feature extractor and motion-feature extractor used in embodiments of the invention, and to demonstrate the benefits of using forward and backward motion features in the motion-feature extractor. A first variant comprised only the object-feature extractor. A second variant comprised only the motion-feature extractor and the detection head, and the motion-feature extractor received as input motion cost volume features only in respect of the forward direction. A third variant comprised the object-feature extractor, the motion-feature extractor and the detection head, wherein the motion-feature extractor receives as input motion cost volume features only in respect of the forward direction.

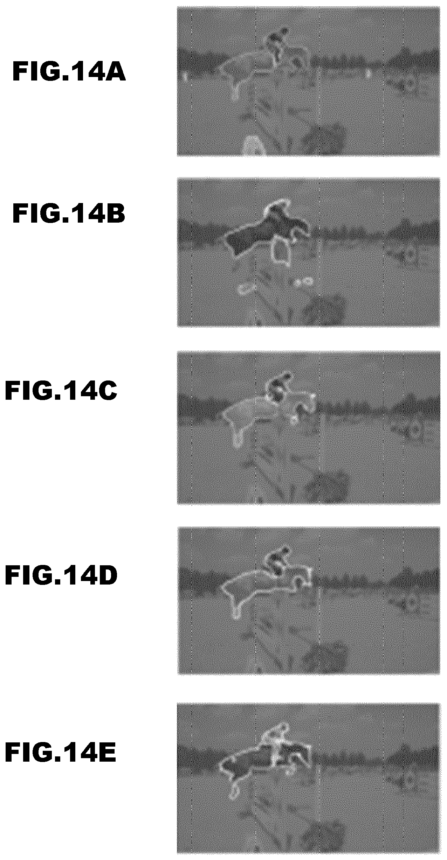

Fig.14A through 14E illustrate segmentations of the third test image frame from the DAVIS-Moving dataset produced by the variants and by the Raptor embodiment of the invention. Figs.14A-C illustrates the respective segmentations produced using the first-third variants, Fig.14D illustrates a segmentation produced using the Raptor embodiment of the invention, and Fig.14E illustrates ground truth.

A number of metrics were evaluated to enable comparison between the performance of the Raptor embodiment of the invention relative to that of RigidMask and Towards, and relative to the variants of the Raptor embodiment. Various of the metrics have been employed in previous work but also some additional new object-centric metrics were added to produce an extended set of performance measures. Raptor, RigidMask and Towards, as well as the variants of Raptor, were all evaluated using this extended measure set.

The extended set of metrics included:

- the precision (P), recall (R) and F-measure (F) metrics introduced in "Segmentation of moving objects by long term video analysis." by P. Ochs, et al, in IEEE Transactions on Pattern Analysis and Machine intelligence, June 2014, 36(6), 1187-1200;
- updated precision (Pu), recall (Ru) and F-measure (Fu) metrics as described in the Achal Dave paper mentioned above (because the original non-updated metrics do not penalize for false-positive detections);
- background intersection over union (bg) and objects intersection over union (obj) metrics described in the Gengshan Yang et al paper mentioned above (for obj, first the best match between the ground truth and predicted segmentation is found, then intersection over union is computed for all objects and averaged);
- to enable better visualisation of the segmentation precision of successfully detected objects (i.e. those for which intersection over union (IoU) with ground truth is greater than 50), we introduced a metric called average overlap (AO) which computes average IoU over these detections only;
- The previous metrics in this list focus on the segmentation quality, so to see the number of falsely detected or missed ground truth objects classical false positive (FP) and false negative (FN) measures were also evaluated. As a single number summary of the previous two metrics, we further computed the average precision (AP) as described in the Tsung-Yi Lin et al paper mentioned above in relation to the COCO dataset.

Table 1 below shows the evaluated metrics for the various moving-object detection and segmentation systems over the different datasets.

TABLE 1

| KITTI '15 | | | | | | | | | | | |
|---|---|---|---|---|---|---|---|---|---|---|---|
| method | bg | obj | P | R | F | Pu | Ru | Fu | AO | FN | FP | AP |
| RigidMask (mono) | 97.43 | 90.73 | 84.31 | 88.19 | 85.57 | 68.73 | 89.41 | 74.47 | 86.66 | 6.03 | 400 | 24.30 |
| Towards | 96.19 | 84.47 | 78.41 | 85.05 | 81.29 | 67.74 | 84.38 | 70.97 | 85.55 | 29.47 | 155 | 31.80 |
| Towards w/o tracking | 94.58 | 79.79 | 74.12 | 79.68 | 76.43 | 59.64 | 82.00 | 64.51 | 80.62 | 36.43 | 194 | 26.00 |
| Raptor | 98.40 | 94.33 | 84.90 | 94.09 | 88.93 | 78.15 | 92.30 | 82.18 | 92.46 | 18.56 | 95 | 54.30 |
| 2nd variant of Raptor | 97.18 | 88.26 | 77.16 | 86.27 | 80.80 | 68.41 | 86.37 | 73.59 | 84.19 | 24.36 | 133 | 41.90 |
| 3rd variant of raptor | 98.28 | 93.17 | 82.70 | 91.60 | 86.56 | 78.17 | 91.29 | 81.56 | 89.97 | 17.63 | 162 | 52.30 |

| KITTI '15-extended | | | | | | | | | | | |
|---|---|---|---|---|---|---|---|---|---|---|---|
| method | bg | obj | P | R | F | Pu | Ru | Fu | AO | FN | FP | AP |
| RigidMask (mono) | 98.39 | 79.32 | 76.56 | 75.29 | 75.13 | 79.75 | 83.82 | 79.32 | 68.28 | 40.66 | 284 | 20.00 |
| Towards | 97.51 | 74.73 | 80.77 | 82.06 | 81.17 | 77.46 | 78.95 | 74.73 | 78.28 | 59.23 | 101 | 24.50 |
| Towards w/o tracking | 96.71 | 69.13 | 73.92 | 74.73 | 74.00 | 69.57 | 76.99 | 69.13 | 71.80 | 63.33 | 146 | 20.00 |
| Raptor | 99.07 | 86.82 | 90.03 | 93.79 | 91.61 | 90.06 | 86.58 | 86.82 | 87.18 | 53.08 | 34 | 41.90 |
| 2nd variant of Raptor | 98.18 | 78.16 | 79.20 | 83.50 | 80.53 | 79.00 | 81.89 | 78.16 | 74.55 | 56.72 | 83 | 29.80 |
| 3rd variant of raptor | 98.96 | 84.97 | 84.54 | 88.51 | 86.12 | 89.29 | 84.49 | 84.97 | 81.83 | 53.64 | 103 | 38.60 |

| DAVIS-Moving | | | | | | | | | | | |
|---|---|---|---|---|---|---|---|---|---|---|---|
| method | bg | obj | P | R | F | Pu | Ru | Fu | AO | FN | FP | AP |
| RigidMask (mono) | 92.68 | 50.78 | 66.59 | 54.63 | 54.55 | 59.98 | 50.50 | 50.78 | 47.68 | 50.41 | 3199 | 4.20 |
| Towards | 96.40 | 79.37 | 81.71 | 85.34 | 82.31 | 78.65 | 82.65 | 79.37 | 73.97 | 18.89 | 549 | 33.00 |
| Towards w/o tracking | 94.90 | 72.57 | 79.96 | 80.31 | 78.35 | 69.11 | 82.12 | 72.57 | 70.11 | 18.25 | 3075 | 20.80 |
| Raptor | 94.87 | 75.93 | 82.74 | 82.11 | 80.84 | 75.90 | 79.67 | 75.93 | 73.16 | 20.99 | 1638 | 40.80 |
| 2nd variant of Raptor | 92.48 | 55.34 | 68.93 | 58.73 | 58.72 | 64.78 | 54.39 | 55.34 | 52.63 | 49.22 | 1852 | 14.00 |
| 3rd variant of raptor | 94.88 | 74.17 | 80.45 | 78.49 | 77.80 | 74.73 | 77.38 | 74.17 | 70.49 | 23.62 | 2339 | 37.30 |

| YTVOS-Moving | | | | | | | | | | | |
|---|---|---|---|---|---|---|---|---|---|---|---|
| method | bg | obj | P | R | F | Pu | Ru | Fu | AO | FN | FP | AP |

| YTVOS-Moving | | | | | | | | | | | | |
|---|---|---|---|---|---|---|---|---|---|---|---|---|
| RigidMask (mono) | 83.62 | 18.70 | 32.77 | 18.21 | 19.71 | 29.88 | 17.48 | 18.70 | 34.42 | 79.94 | 2096 | 1.60 |
| Towards | 92.06 | 74.41 | 81.27 | 77.55 | 77.98 | 77.74 | 74.97 | 74.41 | 75.89 | 22.11 | 543 | 33.50 |
| Towards w/o tracking | 88.83 | 69.24 | 82.32 | 76.36 | 77.05 | 68.73 | 76.83 | 69.24 | 70.54 | 17.98 | 2990 | 20.20 |
| Raptor | 90.47 | 60.35 | 67.51 | 63.50 | 64.10 | 64.43 | 60.94 | 60.35 | 76.20 | 36.37 | 760 | 40.00 |
| 2nd variant of Raptor | 85.02 | 22.46 | 33.49 | 21.39 | 23.58 | 32.74 | 20.05 | 22.46 | 45.74 | 78.55 | 752 | 4.90 |
| 3rd variant of raptor | 89.28 | 48.00 | 53.09 | 50.20 | 50.55 | 51.33 | 48.08 | 48.00 | 75.35 | 50.16 | 415 | 31.90 |

For the metrics FN and FP, the lower the value the better the result. For all of the other metrics, the higher the value the better the result.

It can be seen from Table 1 that the Raptor embodiment of the invention works well on all metrics across all datasets. In particular, it excels in AP and AO measures which shows its ability to discover objects (AP) and its ability to segment well the correctly (IoU > 50) found objects (AO).

Towards is the best on both DAVIS-Moving and YTVOS-Moving, but it used the training parts of these datasets for training and uses the offline tracking. Without tracking, the ranking swaps on DAVIS-Moving and the gap between Raptor and Towards reduces on YTVOS-Moving. The table also shows how much Towards relies on tracking in order to achieve reduction in FP. Towards is significantly worse on both KITTI datasets, demonstrating its inability to cope with complex camera motion and to generalise beyond the training datasets.

The RigidMask algorithm performs reasonably well on the original KITTI annotations containing only rigidly moving objects, but the performance degrades on the extended KITTI dataset where pedestrians and buses are annotated as well. It fails on the other two datasets, where the high FP values indicate that it over-segments the scene into rigid parts.

The commonly used pixel-based measures (bg, obj, P, R, F, Pu, Ru, and Fu) are influenced not only by the good detections as AO or AP, but also the "quality" of FPs and the number of FNs. Slightly weaker values of these measures on DAVIS and YTVOS for Raptor compared to Towards indicate the problem of the motion branch to generate reasonable MCV when the scene is covered almost completely by the object or the background is not static (water, trees, ...). Because the detection head of the Raptor embodiment was trained on the FlyingThings3D dataset only, the Raptor embodiment has never seen such scenes. However, the success of Towards on such sequences indicates that adding similar data into the training dataset used for training Raptor would likely improve results in such cases.

Table 1 shows also the results of the study performed on variants of the Raptor embodiment. The effectiveness of the combination of the semantic and motion branches used in Raptor is demonstrated by comparison of the Raptor results with those obtained in respect of the second variant which uses the motion branch alone employing forward-motion features (MO, FW). The second variant works reasonably well for the KITTI dataset, similarly to the RigidMask method, but fails on non-rigid motion datasets like DAVIS and YTVOS. The results in Table 1 also show that the backward MCV improves performance compared to the forward version only used in the third variant (SEM+MO, FW) across the datasets.

It will be understood from the description above that the present invention provides a novel CNN architecture for the moving-object detection and segmentation problem, that is for discovery and segmentation of objects that are, or their parts are, moving independently in the scene. Given a monocular triplet of video frames, the method outputs semantically meaningful regions, i.e. corresponding to the whole object, even when only a part of it moves.

The architecture of the CNN-based, end-to-end method combines object-extraction (semantic) and motion backbones which pass their outputs to a final region segmentation network. The motion branch may employ a geometrical cost volume that may be computed from optical flow, optical expansion, monodepth and the estimated camera motion. The object-extraction backbone is trained in a class-agnostic manner so that it generalises to object classes beyond the training data, showing strong generalisation ability across a range of environments/datasets. It achieves state-of-the-art results on standard benchmarks using an extensive set of measures. For instance, evaluation of the Raptor embodiment on the instance motion segmentation and binary movingstatic segmentation problems on KITTI, DAVIS-Moving and YTVOS-Moving datasets shows that the proposed method achieves state-of-the-art results on all the datasets and is able to generalise better to various environments. The evaluation used an extended set of metrics demonstrating characteristics not shown by the previous methods; Raptor is the top performer in all of them, often significantly surpassing other methods.

It has been demonstrated that the estimation of geometrical features in both directions (forward and backward) increases the precision of both the discovery and the segmentation outputs within the novel architecture.

Strikingly, the excellent performance of Raptor was achieved despite being trained only on the COCO instance segmentation dataset and synthetic FlyingThings3D dataset. The diversity of the evaluation benchmark data and their difference from the training set implies that Raptor will generalise well to new environments beyond those involved in the evaluation experiments.

Although the present invention has been described above with reference to certain specific embodiments, it will be understood that the invention is not limited by the particularities of the specific embodiments. Numerous variations, modifications and developments may be made in the specified embodiments within the scope of the appended claims.

Thus, for instance, in the specific embodiments described above, the object-feature extractor and motion-feature extractor were trained individually using respective different datasets. However, in other embodiments of the invention a common training dataset is used to perform end-to=end training of the overall architecture including the object=feature extractor, motion-feature extractor and detection head, and the common data set includes training samples in which semantic features (object features) and motion features are both labelled.

**Claims**

1. A detection system (1) to detect moving objects in image data of a monocular video stream, the detection system comprising:

   an object-feature extractor (2) comprising a first trained convolutional neural network structure, the object-feature extractor (2) being configured to receive image data of said monocular video stream and to generate an output comprising object features;
   a motion-feature extractor (4) comprising a second trained convolutional neural network structure, the motion-feature extractor (4) being configured to receive image data of said monocular video stream and to generate an output comprising motion features; and
   a detection head (6) comprising a third trained convolutional neural network structure, the detection head being configured to receive the outputs of the object-feature extractor (2) and the motion-feature extractor (4) and to output segmentation masks identifying respective regions, in a subject image frame ($I_t$) of the monocular video stream, where moving objects are located;
   wherein the object-feature extractor (2) is configured to generate an output comprising class-agnostic object features;
   said detection system being **characterised in that**
   the motion-feature extractor (4) is configured to generate an output comprising first motion features indicative of motion between the subject image frame ($I_t$) and the previous image frame ($I_{t-1}$) and second motion features indicative of motion between the subject image frame ($I_t$) and the next image frame ($I_{t+1}$),
   the motion-feature extractor (4) comprises a motion-cost-volume calculator (42) configured to generate first motion cost volume parameters ($V_{t-i}$) in respect of backward motion from the subject frame ($I_t$) to the previous frame ($I_{t-1}$), and second motion cost volume parameters ($V_{t+1}$) in respect of forward motion from the subject frame ($I_t$) to the next frame ($I_{t+1}$); and
   the second trained convolutional neural network structure (42) is configured to generate motion-feature tensors ($\mathcal{M}_{t-1}, \mathcal{M}_{t+1}$) from inputs consisting of the first and second motion cost volume parameters ($V_{t-1}$, $V_{t+1}$) generated by the motion-cost-volume calculator (42),
   wherein
   the motion-cost-volume calculator (42) is configured to determine, from the image data of the monocular video stream, estimates of monocular depth, optical flow, optical expansion and ego-motion, and to generate said first and second motion cost volume parameters ($V_{t-1}$, $V_{t+1}$) from the estimates of monocular depth, optical flow, optical expansion and ego-motion.

2. The detection system of claim 1 wherein the motion-cost-volume calculator (42) is configured to output, as each of said first and second motion cost volume parameters ($V_{t-1}$, $V_{t+1}$), a motion cost volume consisting of: per-pixel Samson error of the epipolar geometry, per-pixel rotational homography re-projection error, 3D plane+parallax cost, depth contrast cost, first frame 3D scene points, rectified motion field, uncertainty of optical flow and optical expansion, 3D distance and 3D angular plane+parallax cost.

3. The detection system of claim 2, wherein the motion-cost-volume calculator (42) is configured to determine optical flow using the RAFT algorithm, and is configured to output, as the uncertainty of optical flow, a forward-backward consistency cost which is computed as

$$F_{t \to t+1} + warp(F_{t+1 \to t}, F_{t \to t+1})$$

where the warp operation transforms the flow $F_{t+1 \to t}$ to the frame t.

4. The detection system of any one of claims 1 to 3, wherein the second trained convolutional neural network structure in the motion-feature extractor (4) comprises a residual neural network.

5. The detection system of any one of claims 1 to 4, and comprising a convolution layer arranged to reduce the dimensionality of the tensors output from the motion-feature extractor (4).

6. The detection system of any one of claims 1 to 4, wherein the detection head (6) is a hybrid task cascade head.

7. The detection system of any one of claims 1 to 6, wherein the object-feature extractor comprises a residual neural network implementing a recursive feature pyramid backbone with switchable atrous convolutions.

8. A method of training a detection system (1) according to any one of claims 1 to 7, the method comprising:

applying a first training data set to a combination of the object-feature extractor (2) and a first temporary detection head (6At), to determine weights of the first convolutional neural network structure of the object-feature extractor (2) enabling output of class-agnostic object features from the object-feature extractor (2), and fixing the determined weights;

applying a second training data set to a combination of the second convolutional neural network of the motion-feature extractor (4) and a second temporary detection head (6Bt), to determine weights in the second convolutional neural network of the motion-feature extractor (4) enabling output of forward-motion and backward-motion features from the motion-feature extractor (4), and fixing the determined weights;

with said weights in the object-feature extractor (2) and motion-feature extractor (4) being fixed, applying a third training data set to the detection head (6) to train the detection head (6) to output segmentation masks identifying respective regions, in a subject image frame ($I_t$) of the monocular video stream, where moving objects are located.

**Patentansprüche**

1. Erfassungssystem (1) zum Erfassen sich bewegender Objekte in Bilddaten eines monokularen Videostreams, wobei das Erfassungssystem umfasst:

einen Objekt-Merkmalsextraktor (2) umfassend eine erste trainierte neuronale Faltungsnetz-Struktur, wobei der Objekt-Merkmalsextraktor (2) dazu ausgestaltet ist, Bilddaten des monokularen Videostreams zu empfangen und eine Ausgabe zu erzeugen, die Objektmerkmale umfasst,

einen Bewegungs-Merkmalsextraktor (4) umfassend eine zweite trainierte neuronale Faltungsnetz-Struktur, wobei der Bewegungs-Merkmalsextraktor (4) dazu ausgestaltet ist, Bilddaten des monokularen Videostreams zu empfangen und eine Ausgabe zu erzeugen, die Bewegungsmerkmale umfasst, und

einen Erfassungskopf (6), der eine dritte trainierte neuronale Faltungsnetz-Struktur umfasst, wobei der Erfassungskopf dazu ausgestaltet ist, die Ausgaben des Objekt-Merkmalsextraktors (2) und des Bewegungs-Merkmalsextraktors (4) zu empfangen und Segmentierungsmasken auszugeben, welche in einem gegenständlichen Bildrahmen ($I_t$) des monokularen Videostreams jeweilige Regionen identifizieren, wo sich bewegende Objekte sich befinden,

wobei der Objekt-Merkmalsextraktor (2) dazu ausgestaltet ist, eine Ausgabe umfassend klassenagnostische Objektmerkmale zu erzeugen,

wobei das Erfassungssystem **dadurch gekennzeichnet ist, dass**

der Bewegungs-Merkmalsextraktor (4) dazu ausgestaltet ist, eine Ausgabe umfassend erste Bewegungsmerkmale, die auf eine Bewegung zwischen dem gegenständlichen Bildrahmen ($I_t$) und dem vorhergehenden Bildrahmen ($I_{t-1}$) hinweisen, und zweite Bewegungsmerkmale, die auf eine Bewegung zwischen dem gegenständlichen Bildrahmen ($I_t$) und dem nächsten Bildrahmen ($I_{t+1}$) hinweisen, zu erzeugen,

der Bewegungs-Merkmalsextraktor (4) einen Bewegungs-Kosten-Volumen-Berechner (42) umfasst, der dazu ausgestaltet ist, erste Bewegungs-Kosten-Volumen-Parameter ($V_{t-1}$) in Bezug auf eine Rückwärtsbewegung von dem gegenständlichen Rahmen ($I_t$) zu dem vorhergehenden Rahmen ($I_{t-1}$) und zweite Bewegungs-Kosten-Volumen-Parameter ($V_{t+1}$) in Bezug auf eine Vorwärtsbewegung von dem gegenständlichen Rahmen ($I_t$) zu dem nächsten Rahmen ($I_{t+1}$) zu erzeugen, und

die zweite trainierte neuronale Faltungsnetz-Struktur (42) dazu ausgestaltet ist, Bewegungsmerkmal-Tensoren ($\mathcal{M}_{It-1}$, $\mathcal{M}_{It+1}$) aus Eingängen zu erzeugen, die aus den ersten und zweiten Bewegungs-Kosten-Volumen-Parametern ($V_{t-1}$, $V_{t+1}$) bestehen, die durch den Bewegungs-Kosten-Volumen-Berechner (42) erzeugt werden, wobei der Bewegungs-Kosten-Volumen-Berechner (42) dazu ausgestaltet ist, aus den Bilddaten des monokularen Videostreams Schätzungen der monokularen Tiefe, des optischen Flusses, der optischen Ausdehnung und der Eigenbewegung zu bestimmen, und die ersten und zweiten Bewegungs-Kosten-Volumen-Parameter ($V_{t-1}$, $V_{t+1}$) aus den Schätzungen der monokularen Tiefe, des optischen Flusses, der optischen Ausdehnung und der Eigenbewegung zu erzeugen.

2. Erfassungssystem nach Anspruch 1 wobei der Bewegungs-Kosten-Volumen-Berechner (42) dazu ausgestaltet ist, als jeden von den ersten und zweiten Bewegungs-Kosten-Volumen-Parametern ($V_{t-1}$, $V_{t+1}$), ein Bewegungs-Kosten-Volumen auszugeben, das aus: dem Samson-Fehler der epipolaren Geometrie pro Pixel, dem Rotationshomographie-Rückprojektionsfehler pro Pixel, den Kosten 3D-Ebene+Parallaxe, den Tiefenkontrast-Kosten, den 3D-Szenenpunkten des ersten Rahmens, dem rektifizierten Bewegungsfeld, der Unsicherheit des optischen Flusses und der optischen Ausdehnung, dem 3D-Abstand und den Kosten 3D-Winkelebene+Parallaxe besteht.

3. Erfassungssystem nach Anspruch 2, wobei der Bewegungs-Kosten-Volumen-Berechner (42) dazu ausgestaltet ist, den optischen Fluss unter Verwendung des RAFT-Algorithmus zu bestimmen, und dazu ausgestaltet ist, als die Unsicherheit des optischen Flusses einen Vorwärts-Rückwärts-Konsistenz-Kostenwert auszugeben, der berechnet wird als

$$F_{t \to t+1} + warp(F_{t+1 \to t}, F_{t \to t+1})$$

wobei die Verzerrungs-Operation den Fluss $F_{t+1 \to t}$ in den Rahmen t transformiert.

4. Erfassungssystem nach einem der Ansprüche 1 bis 3, wobei die zweite trainierte neuronale Faltungsnetz-Struktur in dem Bewegungs-Merkmalsextraktor (4) ein residuales neuronales Netz umfasst.

5. Erfassungssystem nach einem der Ansprüche 1 bis 4, und umfassend eine Faltungsschicht, die angeordnet ist, um die Dimensionalität der Tensoren zu verringern, die von dem Bewegungs-Merkmalsextraktor (4) ausgegeben werden.

6. Erfassungssystem nach einem der Ansprüche 1 bis 4, wobei der Erfassungskopf (6) ein Hybrid-Task-Kaskaden-Kopf ist.

7. Erfassungssystem nach einem der Ansprüche 1 bis 6, wobei der Objekt-Merkmalsextraktor ein residuales neuronales Netz umfasst, das ein rekursives Merkmalspyramiden-Backbone mit schaltbaren dilatierten Faltungen implementiert.

8. Verfahren zum Trainieren eines Erfassungssystems (1) nach einem der Ansprüche 1 bis 7, wobei das Verfahren umfasst:

Anwenden eines ersten Trainingsdatensatzes auf eine Kombination des Objekt-Merkmalsextraktors (2) und eines ersten temporären Erfassungskopfes (6At), um Gewichtungen der ersten neuronalen Faltungsnetz-Struktur des Objekt-Merkmalsextraktors (2) zu bestimmen, welche die Ausgabe von klassenagnostischen Objektmerkmalen von dem Objekt-Merkmalsextraktor (2) ermöglichen, und Fixieren der bestimmten Gewichtungen, Anwenden eines zweiten Trainingsdatensatzes auf eine Kombination der zweiten neuronalen Faltungsnetz-Struktur des Bewegungs-Merkmalsextraktors (4) und eines zweiten temporären Erfassungskopfs (6Bt), um Gewichtungen in dem zweiten neuronalen Faltungsnetz des Bewegungs-Merkmalsextraktors (4) zu bestimmen, welche die Ausgabe von Vorwärts-Bewegungs- und Rückwärts-Bewegungs-Merkmalen von dem Bewegungs-Merkmalsextraktor (4) ermöglichen, und Fixieren der bestimmten Gewichtungen, wenn die Gewichtungen in dem Objekt-Merkmalsextraktor (2) und dem Bewegungs-Merkmalsextraktor (4) fixiert werden, Anwenden eines dritten Trainingsdatensatzes auf den Erfassungskopf (6), um den Erfassungskopf (6) so zu trainieren, dass er Segmentierungsmasken ausgibt, welche in einem gegenständlichen Bildrahmen ($I_t$) des monokularen Videostreams jeweilige Regionen identifizieren, wo sich bewegende Objekte sich befinden.

**Revendications**

1. Système de détection (1) destiné à détecter des objets en mouvement dans des données d'image d'un flux vidéo monoculaire, le système de détection comprenant :

un extracteur de caractéristique d'objet (2) comprenant une première structure de réseau neuronal circonvolutionnaire entraîné, l'extracteur de caractéristique d'objet (2) étant configuré pour recevoir des données d'image dudit flux vidéo monoculaire et pour générer une sortie comprenant des caractéristiques d'objet ;
un extracteur de caractéristique de mouvement (4) comprenant une deuxième structure de réseau neuronal circonvolutionnaire entraîné, l'extracteur de caractéristique de mouvement (4) étant configuré pour recevoir des données d'image dudit flux vidéo monoculaire et pour générer une sortie comprenant des caractéristiques de mouvement ; et

une tête de détection (6) comprenant une troisième structure de réseau neuronal circonvolutionnaire entraîné, la tête de détection étant configurée pour recevoir les sorties de l'extracteur de caractéristique d'objet (2) et de l'extracteur de caractéristique de mouvement (4) et pour délivrer des masques de segmentation identifiant des régions respectives, dans un cadre d'image de sujet ($I_t$) du flux vidéo monoculaire, où des objets en mouvement sont localisés ;

l'extracteur de caractéristique d'objet (2) étant configuré pour générer une sortie comprenant les caractéristiques d'objet indépendamment de la classe ;

ledit système de détection étant **caractérisé en ce que**

l'extracteur de caractéristique de mouvement (4) est configuré pour générer une sortie comprenant des premières caractéristiques de mouvement indicatives de mouvement entre le cadre d'image de sujet ($I_t$) et le cadre d'image précédent ($I_{t-1}$) et des deuxièmes caractéristiques de mouvement indicatives de mouvement entre le cadre d'image de sujet ($I_t$) et le cadre d'image suivant ($I_{t+1}$),

l'extracteur de caractéristique de mouvement (4) comprend un calculateur mouvement-coût-volume (42) configuré pour générer des premiers paramètres mouvement-coût-volume ($V_{t-1}$) par rapport à un mouvement en arrière depuis le cadre de sujet ($I_t$) jusqu'au cadre précédent ($I_{t-1}$), et des deuxièmes paramètres mouvement-coût-volume ($V_{t+1}$) par rapport à un mouvement vers l'avant depuis le cadre de sujet ($I_t$) jusqu'au cadre suivant ($I_{t+1}$); et

la deuxième structure de réseau neuronal circonvolutionnaire entraîné (42) est configurée pour générer des tenseurs de caractéristique de mouvement ($M_{t-1}$, $M_{t+1}$) à partir d'entrées se composant des premiers et deuxièmes paramètres mouvement-coût-volume ($V_{t-1}$, $V_{t+1}$) générés par le calculateur mouvement-coût-volume (42), le calculateur mouvement-coût-volume (42) étant configurée pour déterminer, à partir des données d'image du flux vidéo monoculaire, des estimations de profondeur monoculaire, de flux optique, d'expansion optique et de mouvement propre, et pour générer lesdits premiers et deuxièmes paramètres mouvement-coût-volume ($V_{t-1}$, $V_{t+1}$) à partir des estimations de profondeur monoculaire, de flux optique, d'expansion optique et de mouvement propre.

2. Système de détection selon la revendication 1 dans lequel le calculateur mouvement-coût-volume (42) est configuré pour délivrer, en tant que chacun desdits premiers et deuxièmes paramètres mouvement-coût-volume ($V_{t-1}$, $V_{t+1}$), un volume de coût de mouvement se composant de : erreur de Samson par élément d'image de la géométrie épipolaire, erreur de re-projection d'homographie de rotation par élément d'image, coût plan 3D + parallaxe, coût de contraste de profondeur, premiers points de scène du cadre 3D, champ de mouvement rectifié, incertitude de flux optique et d'expansion optique, coût de distance 3D et de plan angulaire 3D + parallaxe.

3. Système de détection selon la revendication 2, dans lequel le calculateur mouvement-coût-volume (42) est configuré pour déterminer un flux optique en utilisant l'algorithme RAFT, et est configuré pour délivrer, comme incertitude de flux optique, un coût de cohérence avant-arrière qui est calculé comme

$$F_{t \rightarrow t+1} + \mathtt{warp}(F_{t+1 \rightarrow t}, \ F_{t \rightarrow t+1})$$

où l'opération warp transforme l'écoulement $F_{t+1 \rightarrow t}$ en cadre t.

4. Système de détection selon l'une quelconque des revendications 1 à 3, dans lequel la deuxième structure de réseau neuronal circonvolutionnaire entraîné dans l'extracteur de caractéristique de mouvement (4) comprend un réseau neuronal résiduel.

5. Système de détection selon l'une quelconque des revendications 1 à 4, et comprenant une couche de convolution prévue pour réduire la dimensionnalité des tenseurs qui sortent de l'extracteur de caractéristique de mouvement (4).

6. Système de détection selon l'une quelconque des revendications 1 à 4, dans lequel la tête de détection (6) est une tête de cascade de tâche hybride.

7. Système de détection selon l'une quelconque des revendications 1 à 6, dans lequel l'extracteur de caractéristique d'objet comprend un réseau neuronal résiduel mettant en oeuvre une ossature à pyramide de caractéristique récursive avec les convolutions dilatées permutables.

8. Procédé d'entraînement d'un système de détection (1) selon l'une quelconque des revendications 1 à 7, le procédé comprenant le fait de :

appliquer un premier ensemble de données d'entraînement sur une combinaison de l'extracteur de caractéristique d'objet (2) et d'une première tête de détection provisoire (6At), pour déterminer des pondérations de la première structure de réseau neuronal circonvolutionnaire de l'extracteur de caractéristique d'objet (2) permettant une sortie de caractéristiques d'objet indépendamment de la classe de l'extracteur de caractéristique d'objet (2), et fixer les pondérations déterminées ;

appliquer un deuxième ensemble de données d'entraînement sur une combinaison du deuxième réseau neuronal circonvolutionnaire de l'extracteur de caractéristique de mouvement (4) et d'une deuxième tête de détection provisoire (6Bt), pour déterminer des pondérations dans le deuxième réseau neuronal circonvolutionnaire de l'extracteur de caractéristique de mouvement (4) permettant une sortie de caractéristiques de mouvement vers l'avant et de mouvement vers l'arrière de l'extracteur de caractéristique de mouvement (4), et fixer les pondérations déterminées ;

avec lesdites pondérations dans l'extracteur de caractéristique d'objet (2) et l'extracteur de caractéristique de mouvement (4) qui sont fixées, appliquer un troisième ensemble de données d'entraînement sur la tête de détection (6) pour entraîner la tête de détection (6) pour délivrer des masques de segmentation identifiant des régions respectives, dans un cadre d'image de sujet ($I_t$) du flux vidéo monoculaire, où des objets en mouvement sont localisés.

# FIG.1

1

Video stream

Trained Object-Detection Backbone

_2_

object features

Trained Detection Head

_6_

Segmentation masks

Trained Motion-Detection Backbone

_4_

motion features

# FIG.2A

Frame $I_t$ of video stream

Trained CNN A

_2_

category-agnostic object features of frame $I_t$

# FIG.2B

Training data

CNN A

_2t_

Temp. detection head

_6At_

# FIG.3

Frame $I_t$ of video stream → RFP with SAC [ResNet-50] **20** → $\mathcal{F}_{1/4}$, $\mathcal{F}_{1/8}$, $\mathcal{F}_{1/16}$, $\mathcal{F}_{1/32}$, $\mathcal{F}_{1/64}$

# FIG.4A

40

Frames $I_{t-1}$, $I_t$, and $I_{t+1}$ of video stream → Forward & Backward MCV calculator **42** → CNN B **44** → Forward motion features, Backward motion features

Forward MCV ($I_t \rightarrow I_{t+1}$),
Backward MCV ($I_t \rightarrow I_{t-1}$)

# FIG.4B

40t

Training data → Forward & Backward MCV calculator **42t** → CNN B **44t** → Temp. detection head **6Bt**

**FIG.5**

**FIG.6**

# FIG.7A

object features

motion features

60

Concat

62

Hybrid task

cascade 64

Segmentation
masks

$\mathcal{F}$

$\mathcal{F}_{1/4}$

$\mathcal{F}_{1/8}$

$\mathcal{F}_{1/16}$

$\mathcal{F}_{1/32}$

$\mathcal{F}_{1/64}$

/2

/4

/8

/16

HTC 64

$M_{t-1}$
$M_{t+1}$

# FIG.7B

```
                                              F              1t
   ┌──────────────────────────┐
   │  Trained Object-detection │     ◯
   │         Backbone          │──────────┐
   │                        2  │          │    ┌──────────────┐
   └──────────────────────────┘          ├───▶│   Detection  │──▶ Segmentation
Training ───┐                             │    │     head     │       masks
  data      │                             │    │          60t │
           ┌──────────────────────────┐   │    └──────────────┘
           │ Trained Motion-detection │   │
           │         Backbone         │──────────┘
           │                        4 │    ◯
           └──────────────────────────┘
                                        M_{t-1}
                                        M_{t+1}
```

## FIG.8A

## FIG.8B

## FIG.8C

## FIG.8D

## FIG.9A

## FIG.9B

## FIG.9C

## FIG.9D

**FIG.10A**

**FIG.10B**

**FIG.10C**

**FIG.10D**

FIG.11A

FIG.11B

FIG.11C

FIG.11D

FIG.12A

FIG.12B

FIG.12C

FIG.12D

**FIG.13A**

**FIG.13B**

**FIG.13C**

**FIG.13D**

FIG.14A

FIG.14B

FIG.14C

FIG.14D

FIG.14E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Microsoft Coco: Common objects in context. **TSUNG-YI LIN et al.** European Conference on Computer Vision. Springer, 2014, 740-755
- **ACHAL DAVE et al.** Towards segmenting anything that moves. *Proceedings of the IEEE International Conference on Computer Vision Workshops,* 2019
- **SIUAN QIAO et al.** DetectoRS: Detecting objects with recursive feature pyramid and switchable atrous convolution. *arXiv preprint, arXiv:2006.02334,* 2020
- **GENGSHAN YANG et al.** Learning to segment rigid motions from two frames. *arXiv preprint arXiv 2101.04694,* 2021
- **GENGSHAN YANG et al.** Volumetric correspondence networks for optical flow. *Advances in Neural Information Processing Systems,* 2019, 793-803
- **ZACHARY TEED et al.** Recurrent all-pairs field transforms for optical flow. *arXiv preprint arXiv 2003,* 2020, 12039
- **MICHAL NORAL et al.** Continual occlusions and optical flow estimation. *arXiv preprint, arXiv:1811.01602,* 2018
- **ZHEXIONG WAN et al.** Praflow_rvc: Pyramid recurrent all-pairs field transforms for optical flow estimation in robust vision challenge 2020. *arXiv preprint arXiv: 2009.06360,* 2020
- **ERIC BRACHMANN et al.** Neural-guided ransac: Learning where to sample model hypotheses. *Proceedings of the IEEE International Conference on Computer Vision,* 2019, 4322-4331
- **NIKOLAUS MEYER et al.** A large dataset to train convolutional networks for disparity. Optical flow, and scene estimation. *CVPR,* 2016
- **MORITZ MENZE et al.** Object Scene flow for Autonomous vehicles. *CVPR,* 2015
- **P. OCHS et al.** Segmentation of moving objects by long term video analysis. *IEEE Transactions on Pattern Analysis and Machine intelligence,* June 2014, vol. 36 (6), 1187-1200